# EUROPEAN PATENT APPLICATION

(11) **EP 2 555 150 A2**
(43) Date of publication of application: **06.02.2013**
(21) Application number: 11763085.5
(22) Date of filing: 01.04.2011
(51) Int. Cl.: G06Q 30/00

(54) **METHOD AND APPARATUS FOR PROVIDING A SERVICE IN ACCORDANCE WITH THE VIEWING OF AN ADVERTISEMENT USING DRM**

(30) Priority: 04.05.2010 KR 20100042162; 02.04.2010 KR 20100030617
(71) Applicant: Samsung Electronics Co., Ltd, Gyeonggi-do 443-742 (KR)
(72) Inventor: HWANG, Sung-oh, Yongin-si Gyeonggi-do 448-712 (KR); SELEZNEV, Sergey Nikolayevich, Suwon-si Gyeonggi-do 443-727 (KR)
(74) Representative: Harrison Goddard Foote
(86) International application number: PCT/KR2011/002291
(87) International publication number: WO 2011/122913

(57) **Abstract**

The present invention relates to a method for providing a main service in accordance with the result of the determination of whether or not a user has viewed an advertisement, wherein a device acquires a rights object required for executing an advertisement connected to a specific service, executes the advertisement, reports details of the execution of the advertisement, acquires a rights object required for executing the specific advertisement, and executes the relevant service.

## Description

### [Technical Field]

The present invention relates generally to advertisement services, and more particularly, to a method and apparatus for providing a main service according to a result of advertisement watching.

### [Background Art]

To promote consumption of multimedia services, such as broadcast services or on-demand content delivery services, a method of providing the multimedia services to a user at a lower price by providing contents together with advertisements is expected to be widely used. When a user uses a multimedia service at a lower price by watching an advertisement to encourage the multimedia service, a method of ensuring the user to watch the advertisement is required, and a scheme for smoothly connecting the result of the user's advertisement watching to use of an actual service is also required on the service provider's side.

High-priced multimedia services or contents are usually protected with digital rights management (DRM) and occasionally provided along with advertisements to reduce consumption costs of the multimedia services or contents. The service provider may provide the high-priced multimedia services or contents at reduced costs depending on whether the advertisement was watched, while the user may use the multimedia services or content at lower prices.

### [Disclosure]

### [Technical Problem]

A business model of the service provider depends on whether the user actually watched the advertisement under agreement with the service provider. Therefore, a method of ensuring the service provider to know about the result of whether the user watched the advertisement is needed. And a scheme of the service provider for allowing the user to use the DRM protected high-priced multimedia services or content is also needed.

### [Technical Solution]

The present invention provides a method and apparatus for providing a service provider with a result of user's advertisement watching.

The present invention also provides a method and apparatus for enabling a user to use a main service at a lower cost based on a result of user's advertisement watching

In accordance with an embodiment of the present invention, there is provided In accordance with an embodiment of the present invention, there is provided a method of providing multimedia services in a device, the method comprising receiving at least one advertisement and content corresponding to a certain multimedia service; and transmitting a first request message to request a first right object that represents a right required for executing the at least one advertisement; upon receiving a request response message having the first right object, executing the at least one advertisement by using the first right object; transmitting a report message having an advertisement consumption specification based on the execution of the at least one advertisement; receiving a report response message having an advertisement consumption certificate in response to the report message; and obtaining a second right object that represents a right required for executing the content by transmitting a second request message to request the second right object, wherein the second request message includes information related to the advertisement consumption certificate..

In accordance with another embodiment of the present invention, there is provided there a method of providing a multimedia service via advertisement watching in a rights issuer for issuing rights for content provided with the multimedia service, the method comprising receiving from a device a first request message to request a first right object that represents a right required for executing at least one advertisement; transmitting a first request response message having the first right object to the device; receiving a second request message to request a second right object that represents a right required for executing content associated with the at least one advertisement; generating the second right object, if the second request message includes information related to an advertisement consumption certificate authenticating that the device consumed the at least one advertisement; and transmitting a second request response message having the second right object to the device.

### [Advantageous Effects]

According to the present invention, by applying the DRM technology for protecting multimedia services or content to advertisement consumption, a user is bound to watch the advertisement provided for using the multimedia service or content, and is given a proper right to use the multimedia service or content from a service provider based on the fact that the user watched the advertisement.

### [Description of Drawings]

FIG. 1 is a block diagram of a service system, according to an embodiment of the present invention;
FIG. 2 is a block diagram of a user device, according to an embodiment of the present invention;
FIG. 3 is a block diagram of a rights issuer, according to an embodiment of the present invention;
FIG. 4 is a structure of a right request message, according to an embodiment of the present invention;
FIG. 5 is a structure of a right request response message, according to an embodiment of the present invention;
FIG. 6 is a structure of an advertisement consumption measuring report, according to an embodiment of the present invention;
FIG. 7 is a structure of a token report message, according to an embodiment of the present invention;
FIG. 8 is a diagram of operations between the user device and the rights issuer, according to an embodiment of the present invention;
FIG. 9 is a structure of the right request response message, according to another embodiment of the present invention; and
FIGS. 10 and 11 are diagrams of operations among the user device, the rights issuer, and an advertisement server, according to another embodiment of the present invention.

### [Best Mode]

Reference will now be made in detail to embodiments, examples of which are illustrated in the accompanying drawings, wherein like reference numerals refer to the like elements throughout.

The invention may, however, be embodied in many different forms and should not be construed as being limited to the embodiments set forth herein; rather, these embodiments are provided so that this disclosure will be thorough and complete, and will fully convey the concept of the invention to those skilled in the art. In the description of the present invention, if it is determined that a detailed description of commonly-used technologies or structures related to the invention may unnecessarily obscure the subject matter of the invention, the detailed description will be omitted.

The detailed description described below will present representative embodiments of the present invention in order to achieve the foregoing technological objectives. For convenience of explaining the present invention, terminologies of technologies and entities defined by the Open Mobile Alliance (OMA, a standard body that develops open standards for the mobile phone industry) Digital Right Management (DRM) will be used as they are, but they do not limit the scope of the present invention.

According to the present invention, a service provider provides a main service together with an advertisement and ensures a user to watch the advertisement, thereby allowing the user to use the main service at a lower cost. Especially, by using the DRM technology used in multimedia services or content protection, the service provider allows the user to use the main service based on the result of advertisement watching.

As such, when the user subscribes to a multimedia service provided together with an advertisement(s), a user device requests and obtains from a network entity a right or an authority to use the advertisement to be watched before using the multimedia service. The user device reports a result of advertisement watching, is given the right to use the multimedia service if the result is positive, and executes the multimedia service.

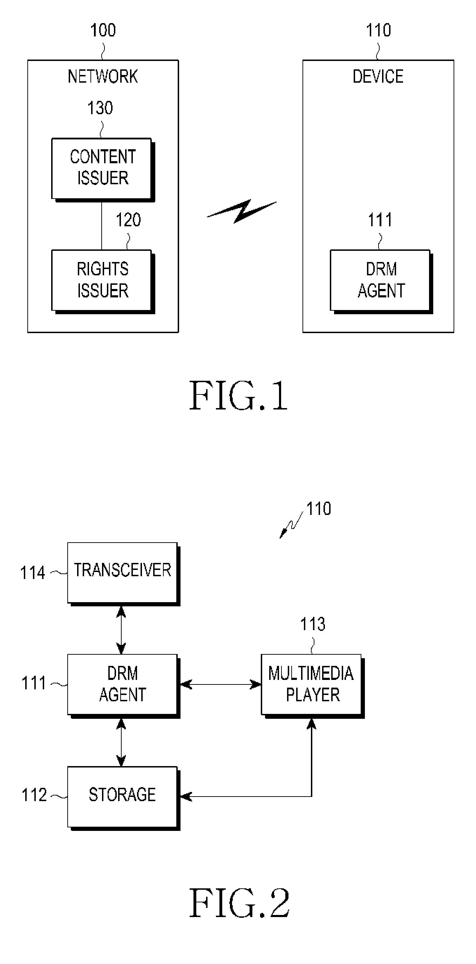

FIG. 1 is a diagram of a service system using DRM, according to an embodiment of the present invention, in which there are entities engaged in providing a DRM protected advertisement-based multimedia service. A network 100 includes a rights issuer 120 and a content issuer 130. A device 110 requesting and executing a particular service includes a DRM agent 111, a display for outputting the advertisement, and a controller for controlling advertisement outputting and the device's 110 general operations.

The network 100 is in an area of an operator or content provider for providing multimedia services or contents and an advertisement provider for providing advertisements, and the device 110 is in an area of a user who consumes the multimedia services or contents and the advertisements.

The content issuer 130, a server device for providing multimedia services to the device 110, is given contents from the content provider and advertisements from the advertisement provider. In the embodiment of the present invention, the content issuer 130 provides a device with a multimedia service and an associated advertisement in response to the device's request. Content to be provided with the requested multimedia service and the associated advertisement may be combined into a service package and then provided to the device.

The rights issuer 120 is a server device for generating and managing right objects (ROs) that represent rights to use various services, contents, advertisements, etc. provided by the content issuer 130. The rights issuer 120 authenticates and registers a device that will consume an RO, and transmits the RO at the request of the device. The rights issuer 120 also monitors if content of interest is consumed as established by the RO, and is given a report of the present state of the content consumption from the device that requested the RO.

In the present invention, the rights issuer 120 and the content issuer 130 generate ROs associated with service packages in which contents and advertisements are combined, under an agreement. In the present invention, a content consumable RO and an advertisement consumable RO are assumed to be separate ROs, and the content consumable RO is assumed to be delivered after advertisement consumption.

In other words, in the embodiment of the present invention, in response to a device's request, the rights issuer 130 transmits a first RO that corresponds to a certain advertisement to the device. If receiving a request for a second RO associated with the certain advertisement from the device, the rights issuer 120 delivers the second RO to the device after determining from an advertisement consumption certificate that the device played the certain advertisement.

The advertisement consumption certificate, information for authenticating that the device consumed the certain advertisement, may be consumption authenticating information that represents only the fact of the consumption, or a token that represents even an amount of the advertisement consumption, according to an embodiment of the present invention. The advertisement consumption certificate may be issued by the rights issuer 120 or by a separate advertisement server for managing an advertisement consumption specification, according to an embodiment of the present invention.

In the case that the rights issuer 120 issues the advertisement consumption certificate, when receiving a report on the consumption of the certain advertisement, the rights issuer 120 delivers the advertisement consumption certificate to the device after confirming of the advertisement consumption.

The device 110 requests a certain multimedia service or content from the content issuer 130, and obtains from the rights issuer 120 an RO for executing the requested multimedia service. The device 110 executes the multimedia service or content, using the obtained RO.

The device 110 requests a certain multimedia service according to an embodiment of the present invention. When receiving a service package corresponding to the multimedia service from the content issuer 130, the device 110 requests from the rights issuer 120 an RO for an advertisement contained in the service package. When receiving the RO for the advertisement from the rights issuer 120, the device 110 plays the advertisement by using the RO. Completing the reproduction of the advertisement, the device 110 reports the advertisement consumption specification to the rights issuer 120 or to an advertisement server, according to an embodiment of the present invention, and obtains the advertisement consumption certificate.
Then, the device requests an RO for content contained in the service package from the rights issuer 120. At this time, the device 110 puts the advertisement consumption certificate into the RO request message and transmits the message to the rights issuer 120. Upon receiving the RO for the content from the rights issuer 120, the device 110 may play the content by using the RO.

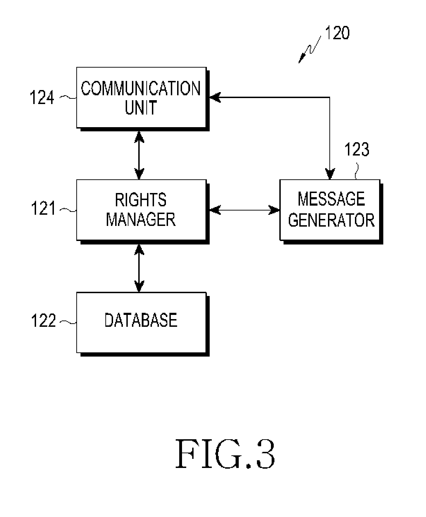

Examples of the device 110 and the rights issuer 120 that operate as discussed above are shown in FIGS. 2 and 3. FIG. 2 shows a block diagram of the device 110 according to an embodiment of the present invention, and FIG. 3 is a diagram of the rights issuer 120 according to an embodiment of the present invention.

Referring to FIG. 2, the device 110 may include a DRM agent 111, a storage 112, a multimedia player 113, and a transceiver 114.

The multimedia player 113 plays the content and the advertisement received with a multimedia service, under the control of the DRM agent 113.

The storage 112 stores programs for controlling the device 110, reference data, many different updatable data for storage, etc., and provides them to a working memory of the DRM agent 111. The storage 112 stores various contents and advertisements received with multimedia services.

The transceiver 114 transmits and receives messages and data to and from a network entity, delivers received messages and data to the DRM agent 111, and transmits to the network entity messages and data delivered from the DRM agent 111.

The DRM agent 111 is a software component for controlling an operation to apply DRM in executing DRM content. Thus, the DRM agent 111 performs operations related to multimedia service request, RO obtainment required for executing the requested multimedia service, and application of the obtained RO, controls operations of each of associated components of the device 110, and processes and generates associated messages.

Referring to FIG. 3, the rights issuer 120 may include a rights manager 121, a database 122, a message generator 123, and a communication unit 124.

The communication unit 124 transmits and receives messages or data to and from network entities or devices, delivers received messages or data to the rights manager 121, transmits messages and data delivered from the right manager 121 and the message generator 123 to a corresponding network entity or device.

The database 122 stores various information required for generating ROs, e.g., device authentication information, and information about authorities for various contents and advertisements. The database 122 stores information related to the advertisement consumption certificate.

The message generator 123 generates many different messages under the control of the rights manager 121, and delivers them to the communication unit 124.

The rights manager 121 performs authentication for a device that requests an RO, and operations related to generation, delivery, processing of ROs for various contents and advertisements, and controls each of the associated components of the rights issuer 120. The rights manager 121 performs operations required for generation and identification of the advertisement consumption certificate, and controls each of the associated components of the rights issuer 120. In other words, the rights manager 121 performs various operations associated with generation, delivery and processing of ROs, and generation or identification of the advertisement consumption certificate, according to the present invention.

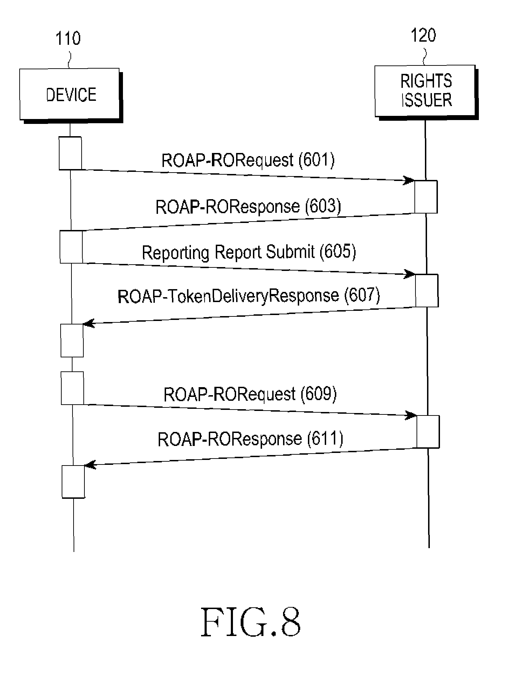

A procedure of providing a multimedia service according to the present invention will be described with reference to FIG. 8. FIG. 8 shows operations between the device 110 and rights issuer 120, according to an embodiment of the present invention. In FIG. 8, DRM messages not directly related to the description of the present invention are omitted.

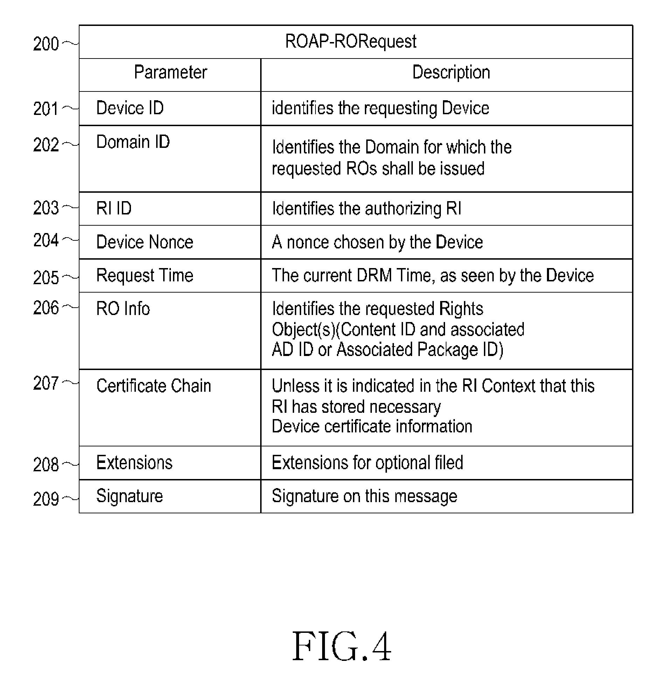

Referring to FIG. 8, the device 110 requests a certain multimedia service from the content issuer 130, and in return, receives a service package corresponding to the multimedia service. The device 110 identifies the service package in which an advertisement and multimedia content are combined, and, in step 601, transmits an RO request message, e.g., an ROAP-RORequest (Right Object Acquisition Protocol Right Object Request) message to the rights issuer 120 in order to obtain an RO enabling to consume the advertisement contained in the service package. An example of the ROAP-RORequest message is shown in FIG. 4.

Parameters shown in FIG. 4 are specified in OMA (Open Mobile Alliance) DRM version 2.

The ROAP-RORequest message 200 is used when the device 110 requests an RO that defines an encryption key and authority for certain content to consume the content. Referring to FIG. 4, the ROAP-RORequest message 200 may include a Device ID field 201, a Domain ID field 202, an RI ID field 203, a Device Nonce field 204, a Request Time field 205, an RO Info filed 206, a Certificate Chain field 207, an Extensions field 208, and a Signature field 209.

A difference between a conventional ROAP-RORequest message and the ROAP-RORequest message 200 according to the present invention lies in what is stored in the RO Info field 206. The RO Info field 206 is where information for designating an RO desired to be obtained is stored. A conventional RO Info field has to include identification information of a certain content to be executed by the device 110, and thus the RO corresponding to the content is bound to be requested. On the contrary, the RO Info field 206 of the present invention may designate an RO desired to be obtained by storing identification information of a certain content and identification information of an advertisement related to the content, and identification information of a service package in which the content and the advertisement are combined.

What is stored in the RO Info field 206 depends on how the service provider informs a user of information about content combined with an advertisement. In an example, if a content identifier is contained in the RO Info filed 206 but the ROAP-RORequest message 200 includes no advertisement consumption certificate, the rights issuer 120 searches for advertisements to be consumed before using the content and transmits an RO for the advertisement to the user device.

If the RO Info field 206 includes an advertisement identifier, the rights issuer 120 generates an RO that corresponds to the advertisement identifier and transmits the RO to the device 110. The rights issuer 120 determines which content to be provided after consumption of the advertisement that corresponds to the advertisement identifier, and transmits an RO related to the content when requested by the device 110 of the user for the RO after the advertisement consumption.

If the RO Info filed 206 includes a package identifier, the rights issuer 120 provides an RO enabling to consume the advertisement contained in the package indicated by the package identifier.

The device ID field 201 of FIG. 4 has a device ID, which is an identifier of the device 110 transmitting the ROAP-RORequest message 200, and the domain ID field 202 has a domain ID, which is an identifier of a domain if the device 110 belongs to the domain. 'Domain' is a concept used in OMA DRM, meaning a set of devices owned by a user, and the user may request an RO to consume certain content in all devices within the domain.

The RI ID field 203 has an RI ID, an identifier of the rights issuer 120 that will receive the ROAP-RORequest message 200. The Device Nonce field 204 has an encrypted value to authenticate the device 110; the Request Time field 205 has a time stamp of when the ROAP-RORequest message 200 is transmitted; and the Certificate Chain field 207 has information about a highest authentication agency that authenticates the device 110. The Extensions field 208 has an additional content in addition to the main content of the message, e.g., the advertisement consumption certificate, and the Signature field 209 has a description to authenticate integrity and security of the ROAP-RORequest message 200.

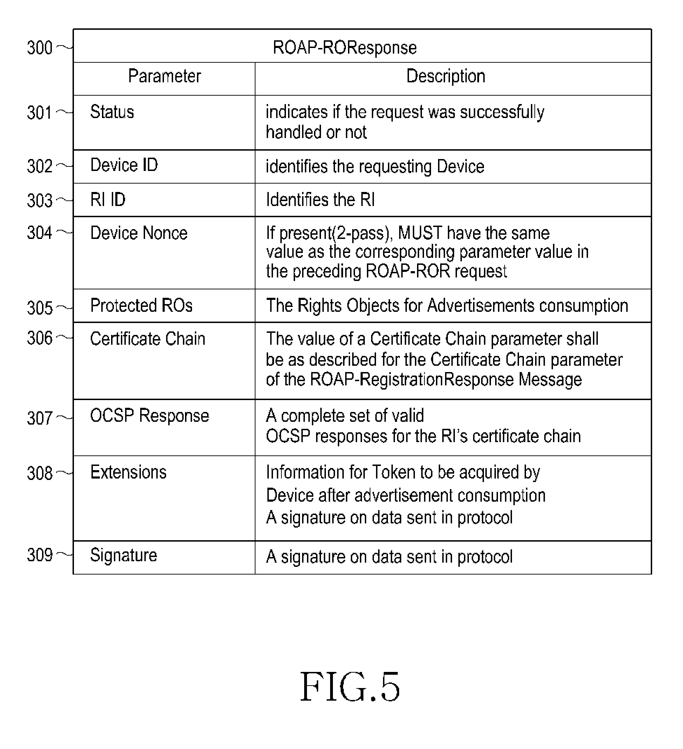

Continuing back to FIG. 8, after receiving in step 601 the ROAP-RORequest message 200 as described in connection with FIG. 4, the rights issuer 120 examines the received ROAP-RORequest and if determining it is a proper request, transmits an RO request-response message, e.g., an ROAP-ROResponse message, in step 603. An example of the ROAP-ROResponse message is shown in FIG. 5.

The ROAP-ROResponse message 300 of FIG. 5, a message indicating the result of processing the RO requested by the device 100, may include a Status field 301, a Device ID field 302, an RI ID field 303, a Device Nonce Field 304, a Protected ROs field 305, a Certificate Chain field 306, an OCSP Response field 307, an Extensions field 308, and a Signature field 309.

The rights issuer 120 sends a rejection message by describing the reason in the Status field 301, if the request of the device 110 using the ROAP-RORequest message 200 is not appropriate, or sends the RO requested by the device 110 if the request is appropriate.

Descriptions and functions of information included in the Device ID field 302, the RI ID field 303, the Device Nonce Field 304, the Signature field 309 are similar to those of the Device ID field 202, the RI ID field 203, the Device Nonce Field 204, and the Signature field 209.

The Protected ROs field 305 includes an RO encrypted with an encryption key only the device 110 may open, and includes in step 603 an RO containing information for advertisement reproduction.

The Certificate Chain field 306 includes information verified by the rights issuer from the highest authentication agency with Certificate Chain information provided by the device 110 using the Certificate Chain field 207 of FIG. 2.

In a case of using a token as the advertisement consumption certificate, the Extensions field 308 has information about the token that may be provided by the rights issuer 120 after advertisement consumption. The information to be included in the Extensions field 308 depends on how the rights issuer 120 will provide the content after the device 110 watches the advertisement.

For example, if a right to use the content is given immediately after the device 110 watched as many advertisements as defined in the RO provided in the Protected ROs field 305, the Extensions field 308 do not need to have any extra information. On the contrary, if the rights issuer 120 issues a kind of token as a result of the advertisement watching for the device 110 to use the token to use the content, the Extensions field 308 may store an amount of the token that will be provided after the advertisement watching. Furthermore, the Extensions field 308 may specify a place to store the token, such as the device 110 or the rights issuer 120, or if an amount of the token for each advertisement is different, the amount of the token may be stored in the Extensions field. If the amount of the token may vary with advertisement watching time, information about the token variation may be provided by the Extensions field 308. Token provision policy may be made by the service provider.

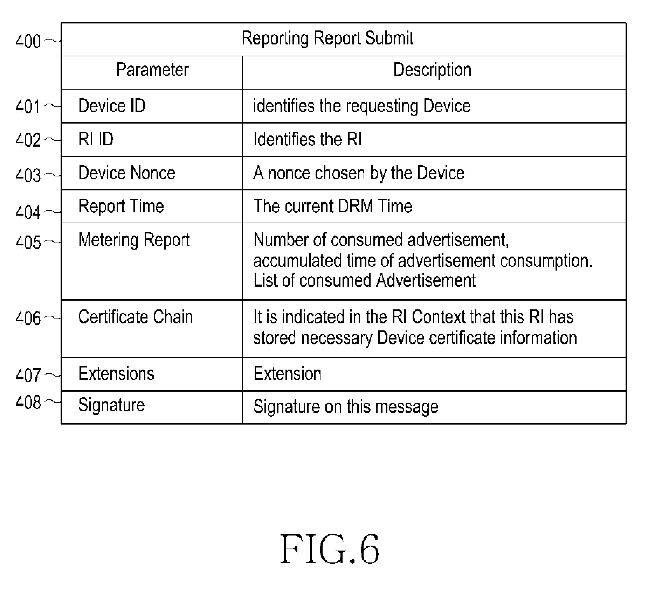

Continuing back to FIG. 8, after consuming the advertisement indicated by the ROAP-RORespone message received in step 603, the device 110 reports the result of the advertisement consumption by sending an advertisement consumption report message, e.g., Reporting Report Submit message to the rights issuer 120, in step 605. An example of the Reporting Report submit message is shown in FIG. 6.

Referring to FIG. 6, the Reporting Report Submit message 400 may include a Device ID field 401, an RI ID field 402, a Device Nonce field 403, a Request Time field 404, a Metering Report field 405, a Certificate Chain field 406, an Extensions field 407, and a Signature field 408.

The Reporting Report Submit message 400 shown in FIG. 6 is obtained by enhancing an ROAP-MeteringReportSubmit message defined by OMA DRM for the purpose of the present invention. The Device ID field 401, the RI ID field 402, the Device Nonce field 403, the Report Time field 404, the Certificate Chain field 406, the Extensions field 407, and the Signature field 408 serve the same roles as those having the same names in connection with FIG. 2.

The Metering Report field 405 may include information of the number of watched advertisements, total advertisement watching time, a list of watched advertisements, etc., and information to be included depends on what are contained in the RO transmitted in the Protected RO field 305 and in the Extensions field 308 of FIG. 5.

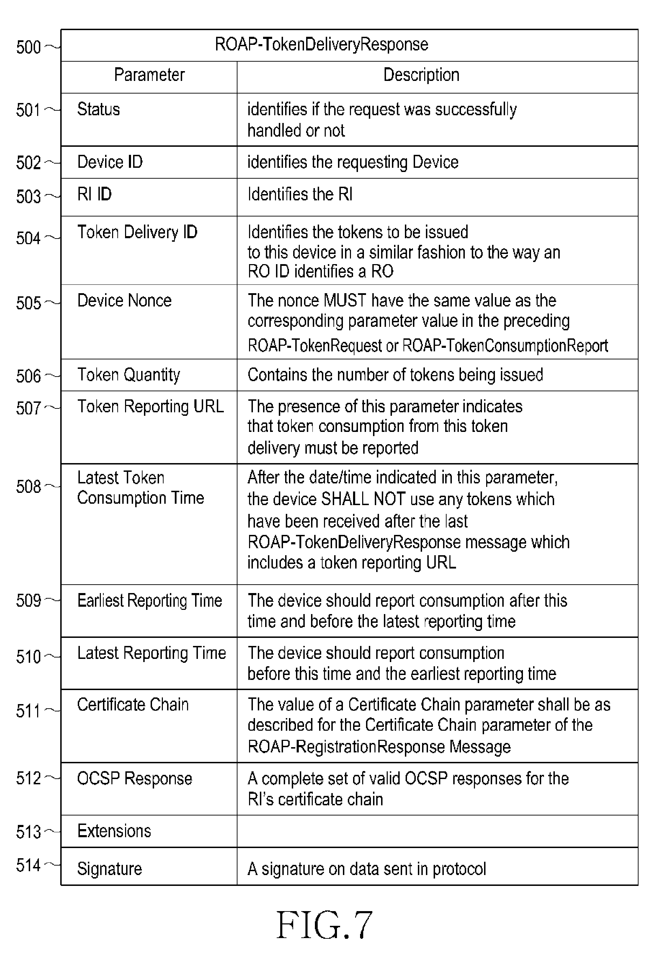

In the foregoing descriptions of FIG. 8, it is assumed that the result of the advertisement consumption is provided by the token. However, if the result of the advertisement consumption is not provided by the token, the device 110 may just report a fact of the advertisement watching. After determining from the Reporting Report Submit message 400 received in step 605 that the device 110 played all the requested advertisements, the rights issuer (RI) 120 transmits an advertisement consumption report response message, e.g., ROAP-TokenDeliveryResponse message to the device 110, in step 607. An example of the ROAP-TokenDeliveryResponse message is shown in FIG. 7, which has a similar structure and role to an ROAP-TokenDeliveryResponse message of OMA DRM 2.0 extension for BCAST.

Referring to FIG. 7, the ROAP-TokenDeliveryResponse message may include a Status field 501, a Device ID field 502, an RI ID field 503, a Token Delivery ID field 504, a Device Nonce Field 505, a Token Quantity field 506, a Token Reporting URL field 507, a Latest Token Consumption field 508, an Earliest Reporting Time field 509, a Latest Reporting Time field 510, a Certificate Chain field 511, an OCSP Response field 512, an Extensions field 513, and a Signature field 514.

The Status field 501 is a field for indicating the result of processing the Reporting Report Submit message in step 605; the Device ID field 502 is a field where an identifier of the device is stored; the RI ID field 503 is a field where an identifier of the rights issuer 120 that issued the token is stored; and the Token Delivery ID field 504 includes an identifier of the issued token.

The Device Nonce field 505 has information needed to authenticate the device; the Token Quantity field 506 is a field for indicating the number of issued tokens; and the Token Reporting URL field 507 has an address of a place to which a result of using the token is reported. The Latest Token Consumption field 508 is a field for indicating a period for the token is valid, and the Earliest Reporting Time field 509 and the Latest Reporting Time field 510 include information about a period within which the device has to report a token consumption state.

The Certificate Chain field 511 contains information of the highest authentication agency; the OCSP Response field 512 contains a response to the certificate chain of the rights issuer 120; and the Extensions field 513 and the Signature field 514 serve the same roles as other fields with the same names.

In the foregoing description, the case of using the token as the advertisement consumption certificate was taken as an example, however in the case of using consumption authentication information as the advertisement consumption certificate, the advertisement consumption report response message may include an identifier of the consumption authentication information, a time period for which the consumption authentication information is valid, etc. In other words, the advertisement consumption response message includes identification information of the consumption certificate and the time period for which the consumption authentication is valid, to indicate that the device 110 has right to obtain an RO for the content.

After receiving the ROAP-TokenDeliveryResponse message 500 in step 607, the device 110 requests the RO for the content desired to be played by a user by transmitting an RO request message, i.e., ROAP-RORequest message to the rights issuer 120 in step 609. The RO request message may include the identifier of the content corresponding to an RO desired to be obtained, and information about the advertisement consumption certificate.

Upon receiving the ROAP-RORequest message in step 607, the rights issuer 120 checks the token or the advertisement consumption certificate included in the ROP-RORequest message, to determine if the device is entitled to obtain the RO for the corresponding content. If yes, the rights issuer 120 delivers the ROAP-ROResponse message including the requested RO to the device 110. The ROAP-RORequest message of step 609 and the ROAP-ROResponse message of step 611 may be configured to be similar to the ROAP-RORequest message and the ROAP-ROResponse message, shown in FIGS. 4 and 5, respectively.

Upon receiving the ROAP-ROResponse message, the device 110 may play the corresponding content by using the RO included in the ROAP-ROResponse message.

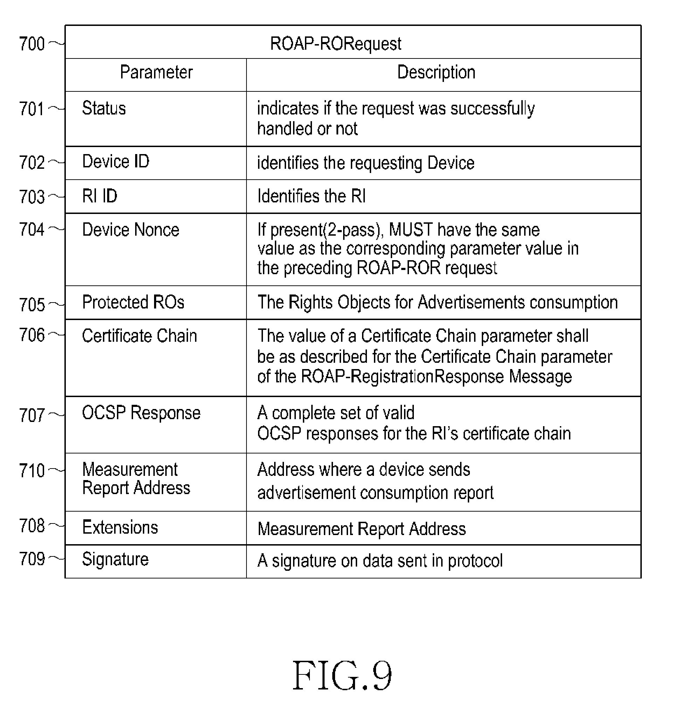

In the foregoing embodiment, the rights issuer 120 checks the advertisement consumption specification of the device 110 and accordingly issues the advertisement consumption certificate, however, the issuance of the advertisement consumption specification of the device 110 and the advertisement consumption certificate may be achieved by a separate server device. FIGS. 9 to 11 are diagrams representing other embodiments of the present invention.

In the other embodiments of the present invention, it is assumed that a business entity providing content in return for the advertisement watching is not the same as the rights issuer 120 providing an RO for the advertisement watching. In other words, after a third party made a business agreement with the owner of the rights issuer 120 that provides the RO to the device 110, the third party provides suitable content to the device 110 according to the result of the device's advertisement consumption, in which case the device 110 reports the advertisement consumption specification not to the rights issuer 120 but to the third party's server. The third party's server may be different from the rights issuer 120 of a business entity that owns the rights issuer 120. Hereinafter, a server to which the device 110 has to report the advertisement consumption specification will be called an advertisement server according to an embodiment of the present invention.

FIG. 9 shows an example of the RO request message configured for the rights issuer 120 to transmit the RO in response to the RO request from the device 110 for the advertisement consumption. In the embodiment of the present invention, an ROAP response message 700 of FIG. 9 includes an address of the server device to which the device 110 has to report the advertisement consumption specification after consuming the advertisement, i.e., an address of the advertisement server.

Referring to FIG. 9, the ROAP response message 700 may include a Status field 701, a Device ID field 702, an RI ID field 703, a Device Nonce field 704, a Protected ROs field 705, a Certificate Chain field 706, an OCSP Response field 707, an Extensions field 708, a Signature field 709, and a Measurement Report Address field 710.

The Device ID field 702, the RI ID field 703, the Device Nonce field 704, the Protected ROs field 705, the Certificate Chain field 706, the OCSP Response field 707, and the Signature field 709 serve the same roles as the Device ID field 302, the RI ID field 303, the Device Nonce field 304, the Protected ROs field 305, the Certificate Chain field 306, the OCSP Response field 307, and the Signature field 309 of FIG. 5.

The measurement Report Address field 710 of FIG. 9 has an address of the server to which the device 110 has to report the advertisement consumption specification after consuming the advertisement, and a URL may be used as the address of the server.

The Extensions field 708 is an example of a case that the Measurement Report Address field 710 does not exist as an independent element but is given a valid value depending on whether there is a value in the Extensions field 709. In other words, if the Measurement Report Address field 710 has a valid address value, the Extensions field 708 does not have any address value; and if the Measurement Address field 710 does not have any address value, then the Extensions field 708 has a valid address value.

In this embodiment, the advertisement consumption measurement reporting may be conducted by using the ROAP-Metering-Report message 400 as is, which is illustrated in FIG. 6. It is assumed that the information contained in the Device ID field 401, the RI DI field 402, the Device Nonce field 403, the Certificate Chain field 406 is information of which the rights issuer 120 transmitting the ROAP Response message 700 shown in FIG. 9 and the advertisement server to receive the advertisement consumption report message mutually know via a prior information exchange. There are numerous ways of the information exchange between the rights issuer 120 and the advertisement server.

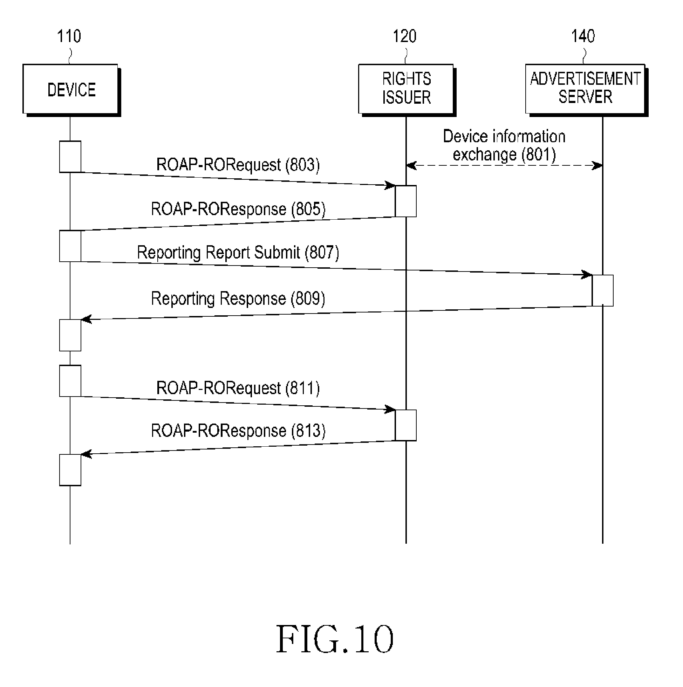

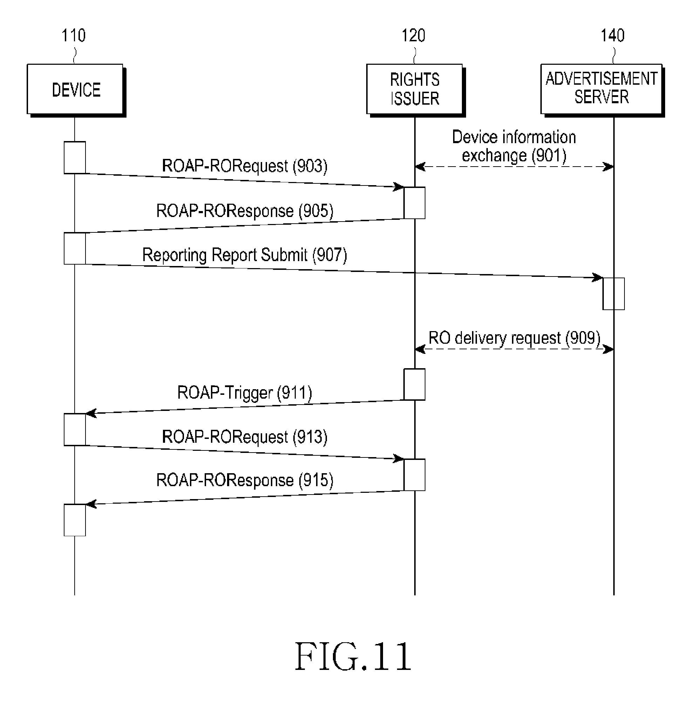

FIGS. 10 and 11 are flowcharts of operations among entities, according to other embodiments of the present invention. In other words, procedures of operations among the device 110 consuming content after advertisement consumption, the rights issuer 120 managing the RO for the content consumption, and the advertisement server 140 determining whether to provide content by determining the advertisement consumption specification are shown.

Referring to FIG. 10, the rights issuer 120 and the advertisement server 140 exchanges information related to the device 110 in advance, in step 801.

The device 110 requests from the rights issuer 120 an RO for enabling to consume an advertisement or advertisements connected to a certain content by using the ROAP-RORequest message.

The rights issuer 120 in return sends the ROAP-ROResponse message 700 in step 805. The structure and operation of the ROAP-ROResponse message shown in FIG. 9 includes an address of the advertisement server 140 for reporting the advertisement consumption specification according to an embodiment of the present invention.

The device 110 reports the advertisement consumption specification to the advertisement server 140 with the Reporting Report Submit message, in step 807, after consuming a certain number of advertisements. The Reporting Report Submit message may be configured like the message illustrated in FIG. 6.

The advertisement server 140 may transmit the advertisement consumption report response message to the device 110 directly, as shown in FIG. 10 or via the rights issuer 120, as shown in FIG. 11, after receiving the advertisement consumption report message from the device 120.

In FIG. 10, upon receiving the Reporting Report Submit message in step 807, the advertisement server 140 checks the advertisement consumption specification included in the received Reporting Report Submit message, and accordingly generates the advertisement consumption certificate. Then, the advertisement server 140 configures the advertisement consumption report response message, e.g., the Reporting Response message including information related to the advertisement consumption certificate and transmits the message to the device 110, in step 809. The advertisement consumption certificate may be consumption certificate information or be a token.

The device 110 receiving the Reporting Response message transmits to the rights issuer 120 the ROAP-RORequest message to request the RO for content consumption in step 811. The ROAP-RORequest message includes information about the advertisement consumption certificate sent in the Reporting Response message.

The rights issuer 120 identifies the information about the advertisement consumption certificate of the ROAP-RORequest message received in step 811, and if the information is appropriate, generates an RO requested by the device 110 and delivers the RO to the device 110, using the ROAP-ROResponse message in step 813.

Upon receiving the ROAP-ROResponse message, the device 110 may play the corresponding content by using the RO included in the ROAP-ROResponse message.

On the other hand, a case of transmitting the advertisement consumption report response message from the advertisement server 140 to the device 110 through the rights issuer 120 will now be described with reference to FIG. 11.

In FIG. 11, steps 901 to 907 are the same as steps 801 to 807 of FIG. 10. In step 907, the advertisement server 140 receiving the Reporting Report Submit message checks the advertisement consumption specification included in the received message and then accordingly generates the consumption certificate. Then, the advertisement server 140 configures the advertisement consumption report response message, e.g., the RO Delivery Request message including information related to the advertisement consumption certificate and transmits the message to the rights issuer 120, in step 909. The RO delivery Request message is a message to request the rights issuer 840 to deliver the RO to the device 110.

Upon receiving the RO Delivery Request message, the rights issuer 120 configures a ROAP-Trigger message to have information related to the advertisement consumption certificate in step 911 and delivers the ROAP-Trigger message to the device 110.

The device 110 receiving the ROAP-Trigger message transmits to the rights issuer 120 the ROAP-RORequest message to request the RO for content consumption in step 913. The ROAP-RORequest message includes information about the advertisement consumption certificate sent in the ROAP-Trigger message.

The rights issuer 120 identifies the information about the advertisement consumption certificate of the ROAP-RORequest message received in step 913, and if the information is appropriate, generates the RO requested by the device 110 and delivers the RO to the device 110, using the ROAP-ROResponse message in step 915.

Upon receiving the ROAP-ROResponse message, the device 110 may play the corresponding content by using the RO included in the ROAP-ROResponse message.

Several embodiments have been described, but it will be understood that various modifications can be made without departing the scope of the present invention. For example, the rights issuer 120 and the content issuer 130 have been described as separate servers in the foregoing descriptions, but they may be integrate into a single server. In other words, a service providing server may be configured to include the content issuer and the rights issuer. Thus, it will be apparent to those ordinary skilled in the art that the invention is not limited to the embodiments described, but can encompass not only the appended claims but the equivalents.

## Claims

1. A method of providing a multimedia service in a device, the method comprising:
receiving at least one advertisement and content corresponding to a certain multimedia service
transmitting a first request message to request a first right object that represents a right required for executing the at least one advertisement;
upon receiving a request response message having the first right object, executing the at least one advertisement by using the first right object;
transmitting a report message having an advertisement consumption specification based on the execution of the at least one advertisement;
receiving a report response message having an advertisement consumption certificate in response to the report message; and
obtaining a second right object that represents a right required for executing the content by transmitting a second request message to request the second right object,
wherein the second request message includes information related to the advertisement consumption certificate.

2. The method of claim 1, wherein the report message is transmitted to a rights issuer for generating the first and second right objects.

3. The method of claim 1, wherein if an advertisement server for managing an advertisement consumption specification is designated as a server adapted to receive the report message for the request response message, the report message is transmitted to the advertisement server and the report response message is received from the advertisement server.

4. The method of claim 1, wherein the advertisement consumption certificate comprises information authenticating that the advertisement has been consumed.

5. The method of claim 1, wherein the advertisement consumption specification comprises identification information of each of the at least one advertisement that has been executed, a number of the executed advertisements, and total execution time.

6. The method of claim 1, wherein the advertisement consumption certificate is a token issued based on an amount of advertisement consumption,
wherein the request response message includes information about a token to be generated in advertisement consumption, and
wherein the report response message includes information about the token generated due to consumption of the at least one advertisement.

7. A user device for providing a multimedia service, the user device comprising:
a multimedia player for executing content and an advertisement provided with a multimedia service; and
an agent for transmitting a first request message that requests a first right object representing a right required for executing at least one advertisement, upon receiving content and at least one advertisement corresponding to a certain multimedia service; upon receiving a request response message having the first right object, having the multimedia player execute the at least one advertisement by using the first right object; transmitting a report message having an advertisement consumption specification based on the execution of the at least one advertisement; receiving a report response message having an advertisement consumption certificate in response to the report message; and obtaining a second right object that represents a right required for executing the content by transmitting a second request message to request the second right object,
wherein the second request message includes information related to the advertisement consumption certificate.

8. The user device of claim 7, wherein the report message is transmitted to a rights issuer for generating the first and second right objects.

9. The user device of claim 7, wherein if an advertisement server for managing an advertisement consumption specification is designated as a server adapted to receive the report message for the request response message, the report message is transmitted to the advertisement server and the report response message is received from the advertisement server..

10. The user device of claim 7, wherein the advertisement consumption certificate comprises information authenticating that the at least one advertisement has been consumed by the user device.

11. The user device of claim 7, wherein the advertisement consumption specification comprises identification information of each of the at least one advertisement that has been executed, a number of the executed advertisements, and total execution time.

12. The user device of claim 7, wherein the advertisement consumption certificate is a token issued based on an amount of advertisement consumption,
wherein the request response message includes information about a token to be generated in advertisement consumption, and
wherein the report response message includes information about the token generated due to consumption of the at least one advertisement.

13. A method of providing a multimedia service via advertisement watching in a rights issuer for issuing rights for content provided with the multimedia service, the method comprising:
receiving from a device a first request message to request a first right object that represents a right required for executing at least one advertisement;
transmitting a first request response message having the first right object to the device;
receiving a second request message to request a second right object that represents a right required for executing content associated with the at least one advertisement;
generating the second right object, if the second request message includes information related to an advertisement consumption certificate authenticating that the device consumed the at least one advertisement; and
transmitting a second request response message having the second right object to the device.

14. The method of claim 13, further comprising
receiving a report message having a consumption specification of the at least one advertisement from the device; and
generating the advertisement consumption certificate corresponding to the consumption specification, and transmitting a report response message having the advertisement consumption certificate to the device.

15. The method of claim 14, wherein the advertisement consumption specification comprises identification information of each of the at least one advertisement that has been executed, a number of the executed advertisements, and total execution time.

16. The method of claim 14, wherein the advertisement consumption certificate is a token issued based on an amount of advertisement consumption,
wherein the first request response message includes information about a token to be generated in advertisement consumption, and
wherein the report response message includes information about the token generated due to consumption of the at least one advertisement.

17. The method of claim 13, further comprising,
upon receiving a message having the advertisement consumption certificate from an advertisement server for managing an advertisement consumption specification, delivering the advertisement consumption certificate to the device.

18. A rights issuer for issuing right for content provided with multimedia services, the rights issuer comprising:
a communication unit for transmitting and receiving messages to and from a device; and
a rights manager for receiving a first request message to request a first right object that represents a right required for executing at least one advertisement from the device, transmitting a first request response message having the first right object to the device; receiving a second request message to request a second right object that represents a right required for executing content associated with the at least one advertisement; generating the second right object, if the second request message includes information related to an advertisement consumption certificate authenticating that the device consumed the at least one advertisement; and transmitting a second request response message having the second right object to the device, through the communication unit.

19. The rights issuer of claim 18, wherein the rights manager receives a report message having a consumption specification of the at least one advertisement from the device through the communication unit, and generates the advertisement consumption certificate corresponding to the consumption specification, and transmits a report response message having the advertisement consumption certificate to the device.

20. The rights issuer of claim 19, wherein the advertisement consumption specification comprises identification information of each of the at least one advertisement that has been executed, a number of the executed advertisements, and total execution time.

21. The rights issuer of claim 19, wherein the advertisement consumption certificate is a token issued based on an amount of advertisement consumption,
wherein the first request response message includes information about a token to be generated in advertisement consumption, and
wherein the report response message includes information about the token generated due to consumption of the at least one advertisement.

22. The rights issuer of claim 18, wherein the rights manager, upon receiving a message having the advertisement consumption certificate from an advertisement server for managing an advertisement consumption specification, delivers the advertisement consumption certificate to the device.
